Europäisches Patentamt

European Patent Office

Office européen des brevets

(11) Numéro de publication : **0 455 568 A1**

(12) # DEMANDE DE BREVET EUROPEEN

(21) Numéro de dépôt : **91440035.3**

(51) Int. Cl.⁵ : **F16L 25/04**

(22) Date de dépôt : **29.04.91**

(30) Priorité : 04.05.90 FR 9005956

(43) Date de publication de la demande :
06.11.91 Bulletin 91/45

(84) Etats contractants désignés :
AT BE CH DE DK ES GB GR IT LI LU NL SE

(71) Demandeur : Société á Responsabilité Limitée
dite: Ets CAILLAU
28 rue Ernest Renan
F-92130 Issy-Les-Moulineaux
(Hauts-de-Seine) (FR)

(72) Inventeur : Calmettes, Lionel
28 rue Ernest Renan
F-92130 Issy-les-Moulineaux (FR)
Inventeur : L'autre inventeur a renoncé à sa
désignation

(74) Mandataire : Lepage, Jean-Pierre et al
Cabinet Lepage & Aubertin Innovations et
Prestations S.A. 23/25, rue Nicolas Leblanc
B.P. 1069
F-59011 Lille Cédex 1 (Nord) (FR)

(54) Collier de serrage et son procédé de fabrication.

(57)    L'invention est relative à un collier de serrage, notamment destiné à fixer l'emboîtement de tubes par rétrécissement du périmètre extérieur ainsi qu'à un procédé de fabrication.
    Le collier de serrage est formé par découpage de lunettes (8 et 9) dans une pièce (7) de tôle ensuite repliée sur elle-même et rabattre les lunettes (8 et 9) l'une contre l'autre. Selon l'invention, les lunettes (8 et 9) sont reliées par une fente (11) qui présente dans sa partie centrale une découpe (13) bordée par des bandes de repliage (12) de largeur "l" constante de part et d'autre de la dite fente (11).

FIG. 2

L'invention est relative à un collier de serrage aini qu'à son procédé de fabrication. Un tel collier est notamment destinée à fixer l'emboîtement de tubes par action au niveau du périmètre du tube extérieur.

Les colliers de serrage trouvent de nombreuses applications dans l'industrie lorsqu'il s'agit de solidariser des tuyaux emboîtés confectionnés en tôle. Toutefois, une des applications concerne l'industrie automobile en particulier pour fixer entre elles les différentes tubulures formant la ligne d'échappement des véhicules.

Parmi les qualités requises pour la réalisation de colliers de serrage, il faut que celui-ci soit démontable pour autoriser le remplacement des pièces et qu'il soit à même à supporter des températures élevées. C'est pourquoi, on le réalise traditionnellement en tôlerie et on utilise comme organe de serrage un boulon tangentiel. Ceci offre en outre l'avantage de réaliser un produit économique.

Pour réaliser de tels colliers, traditionnellement, on découpe dans une pièce de tôle deux lunettes réunies par une fente, puis on replie la pièce de sorte à rabattre les lunettes l'une contre l'autre coaxialement. Dans la boucle de repliage, on introduit l'organe de serrage tangentiel. Divers perfectionnements ont été apportés ce procédé de fabrication pour améliorer le produit.

Tout d'abord, il a été reproché aux colliers de serrage une contrainte d'appui excessive. Pour résoudre ce problème, les fabricants créent un repliage de la bordure interne des lunettes par estampage pour augmenter la surface de contact et diminuer ainsi la pression exercée.

Ensuite, on pouvait déplorer des défauts d'étanchéité en raison de la présence de la fente située sous l'organe de serrage. Pour cela, les constructeurs ont découpé la fente non plus droite mais de façon oblique, ce qui crée deux becs situés à l'intersection de la dite fente avec les lunettes. Une fois la pièce repliée, les becs se chevauchent et l'étanchéité sur tout le pourtour du collier est assurée.

En dépit de ces progrès, les colliers de serrage existants présentent encore quelques défauts. Tout d'abord au niveau de la répartition de l'effort de serrage, la mise en place de jauges de contrainte montre une disparité importante de la pression exercée par le collier de serrage sur son périmètre. En particulier, les efforts sont nettement plus intenses dans la zone située sous l'organe de serrage que dans le reste de la périphérie de la bague.

On peut imputer ce défaut à une rigidité excessive du collier au niveau de l'organe de serrage car la bague est beaucoup plus massive à cet endroit, et se déforme, par conséquent, beaucoup moins que le reste du collier. Ce problème est d'autant plus délicat que, pour exercer une étanchéité minimale, il faut appliquer un effort de serrage important pour compenser les écarts de contrainte. Ceci entraîne bien souvent une déformation des tubes sous l'organe de serrage et il devient très difficile de déboîter par la suite les tubes pour procéder à un échange.

Par ailleurs, la mise en place d'une fente oblique entre la découpe des lunettes occasionne quelques difficultés lors du repliage de la pièce en tôle. En effet, la présente d'une fente oblique signifie que le repliage de la pièce en tôle s'opère sur une largeur variable tout au long de la boucle. Ceci a pour conséquence de favoriser une déformation du collier durant l'opération.

Par ailleurs, l'organe de serrage, qui se présente généralement sous la forme d'un boulon, mis en place dans la zone de repliage du collier, a tendance à se déformer sous l'effort étant donné que d'une part lorsque l'on rapproche les extrémités du collier, on déforme le logement dans lequel est inséré l'organe de serrage en particulier, il se crée un appui du collier sur la partie centrale du boulon qui a donc tendance à fléchir. Ensuite, la fente oblique fait que l'épaisseur des bandes de métal au niveau du repliage du collier sont d'épaisseurs variables et lorsque le boulon y applique son effort, une déformation se produit dans un plan transversal à celui du collier.

Enfin, les utilisateurs des colliers de serrage constatent également que lorsque l'on serre fortement le boulon tangentiel, on crée un effort dans le collier qui a tendance à écarter les lunettes l'une de l'autre.

En conclusion, les colliers de serrage actuels posent quelques problèmes d'utilisation qui exigent notamment un ajustement relativement précis du diamètre de la bague avec celui de la tubulure à fixer car si le rayon de courbure de la bague du collier de serrage peut s'adapter dans une certaine mesure, toute la zone située sous l'organe de serrage voit son rayon de courbure fixe. Enfin, la présence de la fente oblique crée des déformations de l'organe de serrage soumis à un effort de traction.

Le but principal de la présente invention est de présenter un collier de serrage qui permette de pallier les différents inconvénients précités et assure une excellente distribution de la contrainte sur toute la périphérie du collier. Dans ces conditions, une bonne étanchéité peut être obtenue sans serrage excessif et notamment sans déformation des tubulures.

Selon l'invention, l'organe de serrage ne subit aucune déformation pendant l'effort, de même que la seule déformation donnée au collier lors du serrage du boulon se traduit par une réduction du périmètre de la bague sans fléchissement dans une direction transversale au plan du collier.

Un autre but de la présente invention est de présenter un collier de serrage dont la vis du boulon, faisant office d'organe de serrage, est autobloquante. Cela simplifie la mise en place du collier de serrage et il faut remarquer que le boulon est de type standard, c'est-à-dire qu'il s'agit d'un organe économique.

Un autre but de la présente invention est de présenter un procédé de fabrication de collier de serrage selon lequel le cintrage de la tôle s'opère dans de bonnes conditions puisque le repliage se fait sur des largeurs de bandes de tôles constantes.

D'autres buts et avantages de la présente invention apparaîtront au cours de la description qui va suivre qui n'est cependant donnée qu'à titre indicatif.

Selon l'invention, le collier de serrage, notamment destiné à fixer l'emboîtement de tubes par rétrécissement du périmètre extérieur, formé par découpage de lunettes reliées par une fente dans une pièce de tôle ensuite repliée sur elle-même, et comportant un organe de serrage, est caractérisé par le fait qu'il présente des moyens pour répartir la contrainte de serrage sur toute la périphérie du collier.

Le procédé de fabrication de collier de serrage selon le paragraphe précédent, est caractérisé en ce que:

    – on découpe dans une pièce de tôle deux lunettes et deux encoches extérieures,

    – on estampe les bords intérieurs des lunettes et une partie de la périphérie extérieure de la pièce,

    – on découpe largement le centre de la pièce puis on replie la pièce pour rabattre les lunettes l'une contre l'autre.

L'invention sera mieux comprise à la lecture de la description suivante accompagnée de dessins en annexe parmi lesquels:

    – la figure 1 schématise le collier de serrage de la présente invention,

    – la figure 2 représente le plan de découpe de la pièce de tôle pour former le collier de serrage selon la présente invention,

    – la figure 3 montre le collier de serrage en vue de coupe transversale,

    – la figure 4 illustre en détail la présence des arêtes pour obtenir un repli anguleux du collier,

    – la figure 5 schématise la mise en place de l'organe de serrage dans le collier.

La présente invention vise un collier de serrage, ainsi que son procédé de fabrication, notamment destiné à fixer l'emboîtement de tubes par rétrécissement du périmètre extérieur. Elle concerne principalement l'industrie mécanique.

De nombreuses tuyauteries sont composées d'éléments emboîtés bout à bout, la fixation étant réalisée au moyen d'un collier de serrage qui prend appui sur la périphérie de la tubulure extérieure pour la comprimer contre la tubulure inférieure. De tels montages se rencontrent par exemple sur les tubulures d'échappement de véhicules. Le collier de serrage doit, dans ce cas, assurer non seulement la fixation des éléments emboîtés mais également assurer l'étanchéité du raccord. Il faut également tenir compte de la faible épaisseur des tubulures pour que le serrage du collier ne provoque aucune déformation qui rendrait impossible le démontage ultérieur.

Le rôle du collier de serrage est donc d'exercer une contrainte régulièrement répartie sur toute la périphérie de la tubulure. Quoique des progrès importants aient été accomplis grâce à la mise au point de colliers de serrage formés par découpage de lunette dans une tôle repliée avec la présence d'une fente oblique intermédiaire, ce qui permet de disposer de deux becs de recouvrement, il n'en demeure pas moins que des tests révèlent la prépondérance de la contrainte sous l'organe de serrage. D'autres défauts déjà décrits précédemment sont également déplorés et sont liés à certaines dissymétries de construction ou trop grande rigidité de certaines parties du collier.

Précisément, le collier de serrage de la présente invention a été spécialement développé pour apporter une solution aux problèmes actuellement rencontrés et les aspects positifs apportés par les caractéristiques de l'invention n'entament en rien les avantages économiques du produit.

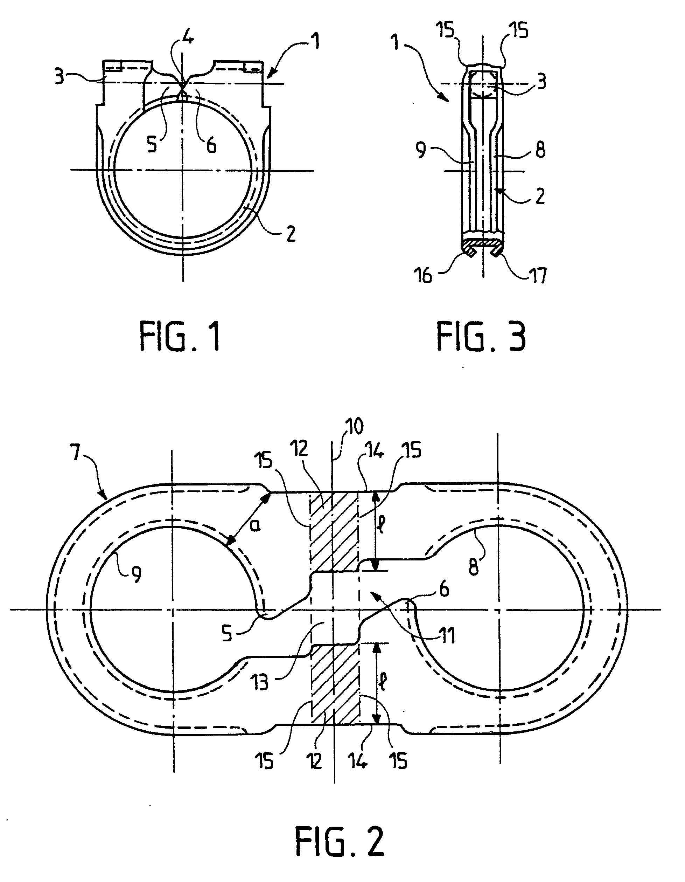

La figure 1 représente le collier de serrage 1 de la présente invention qui se compose d'une bague 2, à l'intérieur de laquelle notamment les tubes à fixer seront placés, et un logement 3 transversal destiné à la mise en place de l'organe de serrage, non illustré sur cette figure, qui se présente généralement sous la forme d'un boulon. La bague 2 comporte une fente 4 pour que la traction exercée par l'organe de serrage puisse se traduire par un rétrécissement du périmètre de la bague 2.

La fente 4 est bordée de part et d'autre par des becs 5 et 6 qui se chevauchent pour assurer la continuité du contact périphérique avec la tubulure.

Le collier de serrage de l'invention présente des moyens pour répartir la contrainte de serrage sur toute la périphérie du collier et plus particulièrement sous l'organe de serrage. Ceci permet d'éviter les déformations de la tubulure sous l'effet d'un effort trop important et mal distribué. De plus, l'étanchéité n'en est que plus facilement réalisée.

La figure 2 montre le plan de découpe et de pliage de la pièce de tôle 7 qui sert à la fabrication du collier de serrage de la présente invention. La pièce 7 comporte deux découpes de lunettes 8 et 9. Ces découpes 8 et 9 sont destinées à être rabattues l'une contre l'autre par repliage de la pièce 7 par rapport à l'axe central 10. Les lunettes 8 et 9 sont reliées par une fente 11 et il faut remarquer que le repliage de la pièce 7 s'obtient par cintrage d'une zone 12, représentée à la figure 2 par une surface hachurée.

Il est à noter que traditionnellement, dans les colliers connus, la fente 11 est découpée obliquement et par conséquent, les bandes de pliage des colliers sont de largeur variable, ce qui a de fâcheuses conséquences au niveau du repliage de la pièce de tôle. Ainsi, l'opération de pliage est difficile à réaliser et de plus, lors du serrage du collier, il y a des déformations nuisibles.

Selon l'invention, les bandes de pliage 12 présentent une largeur "1" constante, de part et d'autre de la dite fente 11, telle qu'illustrée à la figure 2. En outre, une découpe large 13 est réalisée entre les bandes de pliage 12 au centre de la fente 11.

Cette découpe 13 a les bords droits pour respecter la largeur constante 1 des bandes de repliage 12 et le dégagement que procure cette découpe 13 est bénéfique pour la mise en place de l'organe de serrage.

En effet, dans les colliers connus, la vis de l'organe de serrage est presque totalement enfermée dans les bandes de repliage du collier, ce qui fait que lorsque l'on déforme le collier par resserrage du boulon tangentiel, les bords de la fente 4 viennent s'appuyer sur la tige filetée de la vis et la déforme.

Avec la découpe centrale 13 de la présente invention, on crée un dégagement important au niveau de la partie centrale de la vis, visible à la figure 1, ce qui fait qu'à aucun moment, les bandes de repliage 12 ne viennent s'appuyer et déformer la vis de serrage, ou inversement.

On voit à la figure 2 que la présence de la découpe centrale 13 est tout à fait compatible avec l'existence des becs 5 et 6 de recouvrement de la périphérie de la tubulure à serrer.

En outre, des encoches 14 sont découpées de part et d'autre des bandes de repliage 12 comme cela est illustré à la figure 2. Ces encoches permettent de diminuer l'âme du collier c'est-à-dire l'épaisseur de la bague du collier au niveau du point d'appui de l'organe de serrage tel que schématisé à la figure 2 par la distance a. La présence d'une âme importante augmente considérablement la rigidité du collier dans la zone située sous l'organe de serrage; le collier devient indéformable dans cette région et le serrage du boulon provoque la déformation de la tubulure et non pas celle du collier. Précisément, la présence des encoches 14 permet de diminuer favorablement l'épaisseur de l'âme et ainsi de rendre le collier plus souple.

Jusqu'à présent, nous avons envisagé le repliage de la pièce 7 de tôle, pour former le collier 1, localisé dans des bandes 12, ce qui, a priori, donne un profil semi circulaire à la zone de repliage. Toutefois, il est avantageux de marquer les bandes de repliage 12 par des arêtes latérales 15, telles qu'illustrées à la figure 2, pour donner au repliage un profil anguleux, tel que schématisé à la figure 3 dans une vue du collier 1 en coupe transversale.

Par ailleurs, par une opération d'estampage, les rebords périphériques intérieurs des lunettes 8 et 9 sont rabattus pour augmenter la surface de contact et réduire les contraintes, comme cela est illustré à la figure 3.

En outre, les lèvres périphériques extérieures 16, 17 qui, traditionnellement sont droites, sont de préférence rabattues vers l'intérieur du collier selon un angle d'environ 45°. Cette géométrie évite que, lors du serrage du collier 1, les lunettes 8 et 9 aient tendance à s'écarter l'une de l'autre comme cela se rencontre dans les colliers connus.

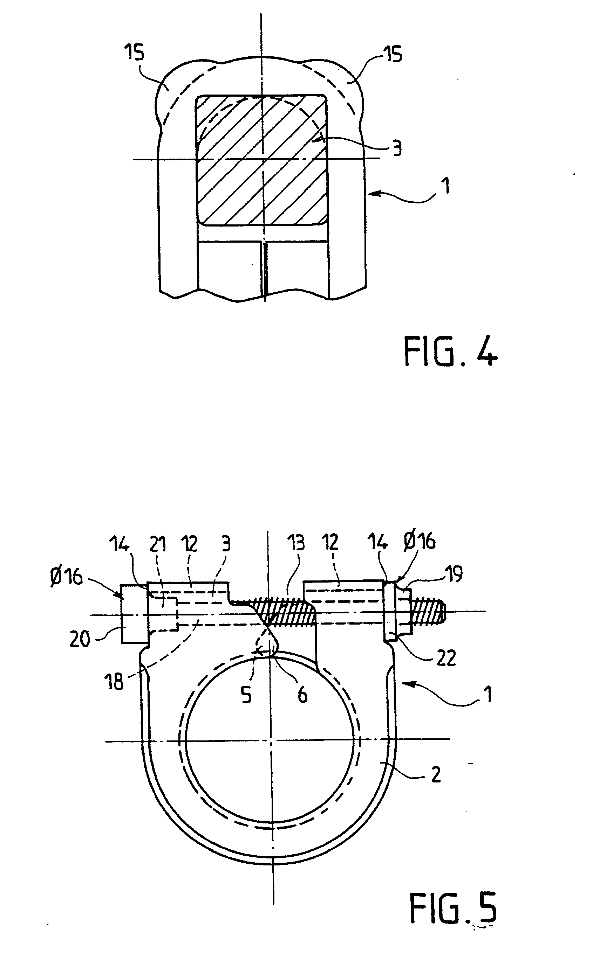

La figure 5 schématise la mise en place de l'organe de serrage tangentiel sur le collier 1. L'organe de serrage se compose d'une vis 18 et d'un écrou 19. La vis 18 comporte une tête 20, dont l'embase 21 est de profil carré, pour s'emboiter dans le logement 3, de formes anguleuses grâce aux arêtes de pliage 15, et y être immobilisé en rotation comme le montre la figure 4. Ceci est très avantageux sur le plan du montage puisque le boulon a donc une vis auto-bloquante. La tête 20 de la vis 18 s'appuie sur toute la surface de l'encoche 14 pour y appliquer une pression répartie.

En ce qui concerne l'écrou 19, celui-ci présente une embase 22 cylindrique qui s'appuie sur l'encoche 14 tout en demeurant libre en rotation pour permettre le serrage du collier 1.

Pour la fabrication du collier de serrage 1, il faut tout d'abord partir d'une plaque de tôle dans laquelle on découpe la pièce 7, telle qu'illustrée à la figure 2, avec les encoches extérieures 14 et les deux lunettes 8 et 9. Il est souhaitable de ne pas découper immédiatement la totalité de la fente 11 mais de conserver la liaison correspondant à la découpe 13 pour faciliter l'opération suivante.

Par une opération d'estampage, on replie les bords intérieurs des lunettes 8 et 9 ainsi que les lèvres périphériques 7 et 17.

On pourra avantageusement marquer les arêtes de pliage 15 pour localiser le repliage de la pièce 7 le long de ses arêtes.

Enfin, on découpe la partie centrale 13 pour que la fente 11 relie les lunettes 8 et 9. La pièce 7 est ensuite repliée pour rabattre les lunettes 8 et 9 l'une contre l'autre coaxialement.

D'autres mises en oeuvre de la présente invention à la portée de l'homme de l'art auraient également pu être envisagées sans pour autant sortir du cadre de celle-ci.

**Revendications**

1. Collier de serrage, notamment destiné à fixer l'emboîtement de tubes par rétrécissement du périmètre extérieur, formé par découpage de lunettes (8 et 9) reliées par une fente (11) dans une pièce (7) de tôle ensuite repliée sur elle-même et comportant un organe de serrage (18, 19), caractérisé par le fait qu'il présente des moyens pour répartir la contrainte de serrage sur toute la périphérie du collier (1).

2. Collier de serrage selon la revendication 1, caractérisé par le fait que le pliage de la pièce (7) de tôle se fait sur des bandes (12) de largeur constante de part et d'autre de la dite fente (11).

3.  Collier de serrage selon la revendication 1, caractérisé par le fait qu'une large découpe (13) est réalisée entre les bandes de repliage (12).

4.  Collier de serrage selon la revendication 1, caractérisé par le fait que les encoches (14) sont découpées de part et d'autre des bandes de repliage (12).

5.  Collier de serrage selon la revendication 1, caractérisé par le fait que des arêtes de repliage (15) sont marquées dans la pièce de tôle (7) pour donner au repliage un profil anguleux.

6.  Collier de serrage selon la revendication 5, caractérisé par le fait que deux arêtes de pliage (15) sont marquées le long des bords latéraux de la bande de repliage (12) pour donner au logement (3) un profil carré.

7.  Collier de serrage selon la revendication 4, caractérisé par le fait que les lèvres périphériques (16 et 17) extérieures des lunettes (8 et 9) sont rabattues vers l'intérieur du collier (1).

8.  Collier de serrage selon la revendication 6, caractérisé par le fait que l'organe de serrage se présente sous la forme d'un boulon dont la vis (18) a une tête (20) qui prend appui contre le bord de l'encoche (14) et dont l'embase (21) est carrée pour s'emboiter dans le logement (3).

9.  Collier de serrage selon la revendication (6), caractérisé par le fait que l'écrou (19) de l'organe de serrage présente une embase (22) cylindrique qui s'appuie contre le bord de l'encoche (14).

10. Procédé de fabrication d'un collier de serrage selon la revendication 1, caractérisé en ce que:
    - on découpe une pièce de tôle (7) avec deux lunettes intérieures (8 et 9) et deux encoches extérieures (14),
    - on replie par estampage des bordures intérieures des lunettes (8 et 9) et une partie de la périphérie des dites lunettes correspondant aux lèvres (16 et 17 ),
    - puis on découpe largement (13) la fente (11) reliant les lunettes (8 et 9),
    - on replie la pièce (7) pour rabattre les lunettes (8 et 9) l'une contre.

FIG. 1

FIG. 3

FIG. 2

15          15

3

1

FIG. 4

14  21  12  3      13  12  14  Ø16

Ø16                                    19

20

22

18

5  6            1

2

FIG. 5

Office européen
des brevets

**RAPPORT DE RECHERCHE EUROPEENNE**

Numero de la demande

EP 91 44 0035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-1 021 277 (PERFORMANCE EQUIPMENT CO., LTD) * Page 1, lignes 13-22,35-43; figures 1,5,6 * | 1-4 | F 16 L 25/04 |
| A |  | 10 | |
| | --- | | |
| X | GB-A- 882 038 (E. OHLSON) * Page 1, lignes 53-66; page 2, lignes 22-33; revendications; figures * | 1,3,4,7 | |
| Y |  | 10 | |
| | --- | | |
| X | US-A-4 275 489 (J.O. JOHANSSON et al.) * Figures 1,4,5; en entier * | 1,3 | |
| Y |  | 10 | |
| | --- | | |
| A | US-A-4 363 436 (R.K. EVANS et al.) * Figures 1-6 * | 1,5,6 | |
| | --- | | |
| A | DE-U-8 533 205 (KIRCHHOFF GmbH) * Figure 2 * | 8 | |

**DOMAINES TECHNIQUES RECHERCHES (Int. Cl.5)**

F 16 L
B 21 D
F 01 N

Le présent rapport a été établi pour toutes les revendications

| Lieu de la recherche | Date d'achèvement de la recherche | Examinateur |
|---|---|---|
| LA HAYE | 04-07-1991 | NEUMANN E. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0403)